# EUROPÄISCHE PATENTSCHRIFT

(11) **EP 0 976 329 B1**
(45) Veröffentlichungstag und Bekanntmachung des Hinweises auf die Patenterteilung: **19.03.2003**
(21) Anmeldenummer: 99113891.8
(22) Anmeldetag: 16.07.1999
(51) Int. Cl.: A01N 57/20

(54) **Wässriges Suspensionskonzentrat, enthaltend Thidiazuron und Ethephon**
Aqueous suspension concentrate containing thidiazuron and ethephon
Suspension aqueuse concentrée contenant thidiazuron et ethephon

(30) Priorität: 31.07.1998 DE 19834598
(43) Veröffentlichungstag der Anmeldung: 02.02.2000
(73) Patentinhaber: Bayer CropScience GmbH, 65929 Frankfurt/Main (DE)
(72) Erfinder: Sixl, Frank, Dr., 65719 Hofheim-Lorsbach (DE)

(56) Entgegenhaltungen:
- EP-A- 0 300 691
- WO-A-87/04047
- DE-A- 2 646 712

## Beschreibung

Die Erfindung betrifft das Gebiet der Pflanzenwuchsregulatoren/Entlaubungsmittel, insbesondere Mischungen von Thidiazuron und Ethephon.

Thidiazuron und Ethephon sind seit geraumer Zeit als Pflanzenwuchsregulatoren/Entlaubungsmittel, insbesondere für den Einsatz in Baumwollkulturen, bekannt (siehe z.B. The Pesticide Manual, 11. Auflage, British Crop Protection Council, Famham, 1997, Thidiazuron Eintragungsnummer 703, Ethephon Eintragungsnummer 281).

Die EP-A-0 300 691 beschreibt pflanzenschützende Zusammensetzungen, die als aktive Substanz Harnstoffderivate wie Thidiazuron enthalten.
Die internationale Patentanmeldung WO-87/04 047 offenbart Formulierungen enthaltend Phosphonsäure-Derivate wie Ethephon als Pflanzenwuchsregulatoren.

In der DE-A- 26 46 712 sind Mischungen aus Thidiazuron und Ethephon beschrieben, wobei ein guter synergistischer Effekt für den Einsatz als Entlaubungsmittel bei Baumwolle belegt ist.

Solche Mischungen sind jedoch bis heute nur als sogenannte Tankmischungen im Einsatz, was bedeutet, daß die Mischungspartner erst kurze Zeit vor der Applikation zusammengegeben werden.

Es wurde nun überraschend gefunden, daß stabile, lagerfähige Suspensionskonzentrate von Thidiazuron und Ethephon hergestellt werden können. Dies war aufgrund der unterschiedlichen Stabilität der beiden Stoffe im sauren Milieu nicht zu erwarten. Für Thidiazuron ist im Pestizide Manual eine Lagerstabilität in einem pH-Bereich von 5 bis 9 angegeben, für Ethephon bei einem pH-Wert kleiner 5.

Gegenstand der Erfindung ist daher ein Suspensionskonzentrat, enthaltend
a) Thidiazuron und Ethephon,
b) ein oder mehrere Tenside,
c) ein oder mehrere Verdickungsmittel und
d) Wasser.

Durch die Bereitstellungen der erfindungsgemäßen Suspensionskonzentrate werden die Nachteile der gebräuchlichen Tankmischungen, wie mangelnde Zuverlässigkeit der Dosierung und geringere Sicherheit der Handhabung überwunden. Zudem bieten die Konzentrate den Vorteil eines reduzierten Verpackungsaufwands.

Die Konzentrate weisen im allgemeinen einen pH-Wert von ≤ 5, vorzugsweise ≤ 2 auf.

Die eingesetzten Wirkstoffe sind bekannt und kommerziell erhältlich, Thidiazuron von AgrEvo, Frankfurt, Deutschland, Ethephon beispielsweise von Rhône-Poulenc Lyon, Frankreich (siehe z.B. The Pesticide Manual u. die dort angegebene Literatur).

Die Wirkstoffe werden im allgemeinen in einem Massenverhältnis von Thidiazuron: Ethephon 1 : 5 - 30, vorzugsweise 1 : 5 - 15, besonders bevorzugt 1: 8 - 12, eingesetzt.

Der Anteil der Wirkstoffe im Suspensionskonzentrat liegt im allgemeinen bei 5 bis 80 Gew.-%, vorzugsweise bei 15 bis 60 Gew.-%.

Die erfindungsgemäßen Konzentrate können als Tensid, das die Dispergiereigenschaften der fest suspendierten Partikel zu verbessern hilft, beispielsweise ein Dodecyl- oder Tridecylbenzolsulfonat in einem Anteil von vorzugsweise 0,01 bis 12 Gew.-% enthalten. So kann beispielsweise ®Maranil (Dodecylbenzolsulfonat-Na-Salz) von Henkel, Düsseldorf, Deutschland als Paste oder Pulver eingesetzt werden.

Als Tenside kommen weiterhin Polyacrylsäurederivate in Frage, wie sie beispielsweise unter den Handelsnamen ®Sokalan CP 10 (BASF), der ®Geropon-Reihe (HB, DA, DG) (Rhône-Poulenc) bzw. ®Disperant-Reihe (Rhône-Poulenc) oder der ®Degapas-Reihe (Degussa, Frankfurt, Deutschland) zu erhalten sind.

Bei ®Sokalan CP 10 handelt es sich um ein modifiziertes Na-Polyacrylat mit niedriger molarer Masse, das nach einem speziellen Polymerisationsverfahren hergestellt wird (BASF, Ludwigshafen, Deutschland) Techn. Info TI/P 3039 d von 1988.

Bei den ®Geropon-Typen HB, DA und DG bzw. ®Dispersant HB und FB handelt es sich gemäß Rhöne-Poulenc-Datenblatt von 1979 bzw. 1989 um Alkalipolyacrylate, die sowohl in flüssiger oder fester Form angeboten werden.

Auch bei der ®Degapass-Reihe handelt es sich um Alkali- bzw. Ammoniumsalze von Polyacrylsäurederivaten.

Bevorzugt eignen sich als Tenside ethoxylierte Tristyrylphenole. Es werden im allgemeinen 0,1 bis 30 Gew.-%, vorzugsweise 0,5 bis 20 Gew.-%, des Tensids oder der Tensidmischung zugesetzt. Der Ethoxylierungsgrad kann im Fall der Tristyrylphenolderivate zwischen 10 und 40, vorzugsweise jedoch zwischen 14 und 28 liegen. Die Tristyrylphenolderivate werden beispielsweise unter den Handelsnamen ®Soprophor FL, ®Soprophor CY/8, ®Soprophor S/25, ®Soprophor FL/60, ®Soprophor FLK (Rhône-Poulenc), Hoe S 2374, Hoe S 3475, Hoe S 3775 (Clariant, Basel, Schweiz) vertrieben.

Besonders bevorzugt sind nichtionische Tenside, ganz besonders bevorzugt ist ®Soprophor S/25.

Die erfindungsgemäß verwendeten Verdickungsmittel können anorganischer oder organischer Natur sein; sie können auch kombiniert werden. Geeignet sind z.B. solche auf Aluminium-; Xanthan-, Methylcellulose-, Polysaccharid-, z.B. Alginat-, Erdalkalisilikat-, Gelatine- und Polyvinylalkohol-Basis, wie Montmorillonite und deren organische Derivate, z.B. ®Bentone EW und ®Bentone LT, ®Veegum, ®Rhodopol 23, ®Kelzan S oder Satiaxan. Bevorzugt sind Verdickungsmittel auf Polysaccharidbasis.
Der Anteil des Verdickungsmittels an dem Suspensionskonzentrat beträgt im allgemeinen 0,05 bis 0,5 Gew.-%, vorzugsweise 0,1 bis 0,2 Gew.-%.

Vorzugsweise enthält das erfindungsgemäße Suspensionskonzentrat ein oder mehrere Füllstoffe, beispielsweise auf Basis von Kieselsäure, wie das in Wasser nicht quellende Kieselgur (z.B. ®Diamol, Fa. Bertram, Hamburg, Deutschland), oder Tonmineralien, wie ®Kaolin 1777.

Bevorzugt als Füllstoff ist ®Diamol.
Der Füllstoff wird im allgemeinen in einer Menge von 2 bis 50 Gew.-%, vorzugsweise 5 bis 20 Gew.-% zugegeben.

Konzentrate, die einen Füllstoff enthalten, weisen im allgemeinen Vorteile bezüglich Sedimentationsgeschwindigkeit, Bildung von Bodensätzen und Phasentrennung auf.

Weiterhin können dem erfindungsgemäßen Konzentrat noch zusätzlich bis zu 25 Gew.-%, vorzugsweise bis zu 15 Gew.-%, handelsüblicher Hilfsmittel zugesetzt werden, wie Netzmittel, Entschäumer, Konservierungsmittel und/oder Frostschutzmittel.

Als zusätzliche Netzmittel kommen beispielsweise Tributylphenolpolyglykolether, wie die ®Sapogenat T-Marken (Clariant) oder Nonylphenolpolyglycolether, wie die ®Arkopal N-Marken (Clariant) in Frage.

Geeignete Entschäumer sind beispielsweise solche auf Siliconbasis, wie aus der ®Silcoolapse-Reihe (Rhône Poulenc), SE 39 oder Antischaummittel SH (Wacker).

Wenn nötig, finden Konservierungsmittel, beispielsweise auf Formaldehyd-, Benzoesäure- und Triphenylzinn-Basis, Verwendung, z.B. ®Kobate C.

Weiterhin können auch Frostschutzmittel, wie Harnstoff, Salze, Polyole (z.B.Glykol, Propylenglykol oder Glycerin) oder Zucker, zugesetzt werden.

Zur Herstellung der erfindungsgemäßen Suspensionskonzentrate verrührt man die Komponenten, beispielsweise mit Wasser, und zerkleinert die erhaltene grobteilige Suspension gegebenenfalls durch Vermahlen in beispielsweise einer Korund- oder Zahnscheibenmühle auf Feinheiten von etwa 200 µm und mahlt das Produkt anschließend, beispielsweise in Reibkugelmühlen oder Sandmühlen, bis die Partikel der Suspension vorzugsweise in Teilchengrößen von 0,1 bis 10 µm, besonders bevorzugt unter 5 µm, vorliegen. Die Teilchengröße wird beispielsweise mittels einer Scheibenzentrifuge oder eines Coulter-Counter-Zählgeräts bestimmt.

Ein solches Verfahren ist ebenfalls Gegenstand der Erfindung, wie auch Suspensionskonzentrate, die nach diesem Verfahren erhältlich sind.

Die Anwendung des erfindungsgemäßen Suspensionskonzentrats erfolgt auf einfache Weise dadurch, daß man das Konzentrat mit der gewünschten Menge Wasser verdünnt, verrührt und auf die Pflanze aufbringt. Die aus den erfindungsgemäßen Konzentraten erhaltenen Spritzbrühen zeichnen sich insbesondere durch eine gleichmäßige Verteilung der Wirkstoffe aus, die auch nach 24-stündigem Stehen noch erhalten bleibt.

Das erfindungsgemäße Suspensionskonzentrat eignet sich insbesondere zur Entlaubung sowie zur Beschleunigung der Kapselöffnung von Baumwollpflanzen, wodurch der Einsatz von Erntemaschinen erheblich vereinfacht wird.

Ebenso eignet sich das erfindungsgemäße Konzentrat aber auch zur Beeinflussung des Wachstums oder zum Entlauben anderer Pflanzen.

Gegenstand der Erfindung ist auch ein Verfahren zur Regulierung des Wachstums/Entlaubung von Pflanzen, dadurch gekennzeichnet, daß die Pflanze mit einem, gegebenenfalls verdünnten, erfindungsgemäßen Suspensionskonzentrat behandelt wird.
Verdünnt wird vorzugsweise mit Wasser, bei der Pflanze handelt es sich vorzugsweise um eine Baumwollpflanze.

Gegenstand der Erfindung ist auch die Verwendung eines erfindungsgemäßen Suspensionskonzentrates zur Wachstumsregulation / zum Entlauben einer Pflanze, vorzugsweise einer Baumwollpflanze.

Die Anwendungsmenge des Konzentrats kann mit den äußeren Bedingungen, wie Temperatur und Feuchtigkeit, in weiten Bereichen schwanken;
sie beträgt im allgemeinen von 1 bis 10 000 g Gesamtwirkstoff/ha, vorzugsweise von 1 g bis 1000 g Gesamtwirkstoff/ha.

Die Applikation erfolgt üblicherweise nach Verdünnung mit Wasser, wobei im allgemeinen 100 bis 1000 l Sprühflüssigkeit pro Hektar verwendet werden. Ebenso möglich ist die Verwendung nach den sogenannten LV (low volume)- oder ULV (ultra low volume)-Methoden.

Das erfindungsgemäße Konzentrat kann je nach Verwendungszweck gegebenenfalls in Kombination mit weiteren Wirkstoffen, wie weiteren Entlaubungsmitteln und Pflanzenschutzmitteln (Herbiziden, Insektiziden, Fungiziden etc.), eingesetzt werden.

Eine Erhöhung von Wirkung und Wirkgeschwindigkeit kann gegebenenfalls auch durch Additive, wie organische Lösungsmittel, Netzmittel und Öle, erfolgen, wodurch die erforderliche Aufwandmenge gesenkt werden kann.

Selbstredend kann das erfindungsgemäße Konzentrat auch zur Behandlung gentechnisch veränderter Pflanzen, insbesondere gentechnisch veränderter Baumwolle, die beispielsweise ein oder mehrere Fremdgene zur Erzielung von Insektizid und/oder Herbizidresistenzen enthalten, eingesetzt werden.

Die Erfindung wird durch die Beispiele näher erläutert, ohne sie dadurch einschränken zu wollen.

### Beispiele

### Beispiel 1

### Formulierung 1:

| Komponente | Gew.-% |
|---|---|
| Ethephon | 36,00 |
| Thidiazuron | 3,00 |
| ®Soprophor S25 | 5,00 |
| Satiaxane | 0,20 |
| H₂O | 55,80 |

### Lagerstabilität von Formulierung 1:

| Zeit | Gew.-% Thidiazuron |
|---|---|
| Ausgangswert | 3,09 |
| 2 Wochen RT | 3,09 |
| 2 Wochen 40°C | 3,07 |
| 2 Wochen 54°C | 3,05 |
| 8 Wochen RT | 3,04 |
| 8 Wochen 40°C | 3,04 |
| 8 Wochen 54°C | 2,96 |

### Beispiel 2

### Formulierung 2:

| Komponente | Gew.-% |
|---|---|
| Ethephon | 36,00 |
| Thidiazuron | 3,00 |
| ®Soprophor S25 | 5,00 |
| ®Bentone LT | 0,20 |
| H₂O | 55,80 |

### Lagerstabilität von Formulierung 2:

| Zeit | Gew.-% Thidiazuron |
|---|---|
| Ausgangswert | 3,06 |
| 2 Wochen RT | 3,02 |
| 2 Wochen 40°C | 3,01 |
| 2 Wochen 54°C | 3,00 |
| 8 Wochen RT | 3,02 |
| 8 Wochen 40°C | 3,00 |
| 8 Wochen 54°C | 2,93 |

### Beispiel 3:

### Formulierung 3:

| Komponente | Gew.-% |
|---|---|
| Thidiazuron | 2,50 |
| Ethephon | 30,00 |
| ®Soprophor S25 | 4,17 |
| ®Diamol | 16,66 |
| Satiaxane (x 91) | 0,17 |
| H₂O (demineralisiert) | 46,50 |

Formulierung 3 zeigte eine besonders niedrige Sedimentationsgeschwindigkeit, eine Bildung von Bodensatz oder Phasentrennung war nicht zu beobachten.

## Patentansprüche

1. Suspensionskonzentrat, enthaltend
a) Thidiazuron und Ethephon,
b) ein oder mehrere Tenside,
c) ein oder mehrere Verdickungsmittel und
d) Wasser.

2. Suspensionskonzentrat gemäß Anspruch 1, **dadurch gekennzeichnet, daß** die Wirkstoffe Thidiazuron und Ethephon in einem Massenverhältnis von 1 : 5 bis 30 vorliegen.

3. Suspensionskonzentrat gemäß Anspruch 1 oder 2, **dadurch gekennzeichnet, daß** es ein oder mehrere nichtionische Tenside enthält.

4. Suspensionskonzentrat gemäß Anspruch 3, **dadurch gekennzeichnet, daß** das Tensid ein ethoxyliertes Tristyrylphenol ist.

5. Suspensionskonzentrat gemäß einem oder mehreren der Ansprüche 1 bis 4, **dadurch gekennzeichnet, daß** es zusätzlich einen Füllstoff enthält.

6. Suspensionskonzentrat gemäß einem oder mehreren der Ansprüche 1 bis 5, **dadurch gekennzeichnet, daß** es ein oder mehrere weitere Hilfsmittel aus der Gruppe Netzmittel, Entschäumer, Konservierungsmittel und/oder Frostschutzmittel enthält.

7. Verfahren zur Herstellung eines Suspensionskonzentrats gemäß einem oder mehreren der Ansprüche 1 bis 6, wobei die Komponenten verrührt werden und die erhaltene Suspension gegebenenfalls zerkleinert und gemahlen wird.

8. Verfahren gemäß Anspruch 7, **dadurch gekennzeichnet, daß** man das Suspensionskonzentrat auf eine Teilchengröße von 0,1 bis 10 µm mahlt.

9. Suspensionskonzentrat, erhältlich durch Vermischen von
a) Thidiazuron und Ethephon,
b) ein oder mehrere Tenside,
c) ein oder mehrere Verdickungsmittel und
d) Wasser,
gegebenenfalls Zerkleinern und Vermahlung der erhaltenen Suspension.

10. Verfahren zur Regulierung des Wachstums/Entlaubung einer Pflanze, **dadurch gekennzeichnet, daß** man die Pflanze mit einem, gegebenenfalls verdünnten, Suspensionskonzentrat gemäß einem oder mehreren der Ansprüche 1 bis 6 und/oder 9 behandelt.

11. Verfahren gemäß Anspruch 10, **dadurch gekennzeichnet, daß** es sich um eine Baumwollplanze handelt.

12. Verfahren gemäß Anspruch 11, **dadurch gekennzeichnet, daß** die Baumwollpflanze gentechnisch verändert ist.

13. Verwendung eines Suspensionskonzentrates gemäß einem oder mehreren der Ansprüche 1 bis 6 und/oder 9 zur Regulierung des Wachstums/Entlaubung einer Pflanze, insbesondere einer Baumwollpflanze.

## Claims

1. A suspension concentrate comprising
a) thidiazuron and ethephon,
b) one or more surfactants,
c) one or more thickeners and
d) water.

2. The suspension concentrate as claimed in claim 1, wherein the active compounds thidiazuron and ethephon are present in a mass ratio of 1:5 to 30.

3. The suspension concentrate as claimed in claim 1 or 2, which comprises one or more nonionic surfactants.

4. The suspension concentrate as claimed in claim 3, wherein the surfactant is an ethoxylated tristyrylphenol.

5. The suspension concentrate as claimed in one or more of claims 1 to 4, which additionally comprises a filler.

6. The suspension concentrate as claimed in one or more of claims 1 to 5, which comprises one or more further auxiliaries selected from the group consisting of wetting agents, defoamers, preservatives and/or antifreeze agents.

7. A process for preparing a suspension concentrate as claimed in one or more of claims 1 to 6, which comprises mixing up the components and, if appropriate, comminuting and grinding the resulting suspension.

8. The process as claimed in claim 7, wherein the suspension concentrate is ground to a particle size of from 0.1 to 10 µm.

9. A suspension concentrate obtainable by mixing
a) thidiazuron and ethephon,
b) one or more surfactants,
c) one or more thickeners and
d) water,
and, if appropriate, comminuting and grinding the resulting suspension.

10. A method of regulating the growth/defoliation of a plant, which comprises treating the plant with an undiluted or diluted suspension concentrate as claimed in one or more of claims 1 to 6 and/or 9.

11. The method as claimed in claim 10, wherein the plant is a cotton plant.

12. The method as claimed in claim 11, wherein the cotton plant has been genetically modified.

13. The use of a suspension concentrate as claimed in one or more of claims 1 to 6 and/or 9 for regulating the growth/defoliation of a plant, in particular a cotton plant.

## Revendications

1. Concentrat de suspension, contenant
a) thidiazuron et éthéphon,
b) un ou plusieurs agents tensio-actifs,
c) un ou plusieurs agents épaississants et
d) de l'eau.

2. Concentrat de suspension selon la revendication 1, **caractérisé en ce que** les substances actives thidiazuron et éthéphon se présentent en un rapport en masse de 1:5 jusqu'à 30.

3. Concentrat de suspension selon la revendication 1 ou 2, **caractérisé en ce qu'**il contient un ou plusieurs agents tensio-actifs non ioniques.

4. Concentrat de suspension selon la revendication 3, **caractérisé en ce que** l'agent tensio-actif est un tristyrylphénol éthoxylé.

5. Concentrat de suspension selon une ou plusieurs des revendications 1 à 4, **caractérisé en ce qu'**il contient de plus une charge.

6. Concentrat de suspension selon une ou plusieurs des revendications 1 à 5, **caractérisé en ce qu'**il contient un ou plusieurs autres adjuvants dans le groupe des agents mouillants, des agents anti-moussants, des agents de conservation et/ou des agents antigel.

7. Procédé pour la préparation d'un concentrat de suspension selon une ou plusieurs des revendications 1 à 6, dans lequel les composants sont mélangés sous agitation et la suspension obtenue est éventuellement concassée et broyée.

8. Procédé selon la revendication 7, **caractérisé en ce qu'**on broie le concentrat de suspension à une taille de particule de 0,1 à 10 µm.

9. Concentrat de suspension, que l'on peut obtenir par mélange de
a) thidiazuron et éthéphon,
b) un ou plusieurs agents tensio-actifs,
c) un ou plusieurs agents épaississants et
d) de l'eau,
éventuellement par concassage et broyage de la suspension obtenue.

10. Procédé pour la régulation de la croissance/défoliation d'une plante, **caractérisé en ce que** l'on traite les plantes avec un concentrat de suspension, éventuellement dilué selon une ou plusieurs des revendications 1 à 6 et/ou 9.

11. Procédé selon la revendication 10, **caractérisé en ce qu'**il s'agit d'une plante de laine.

12. Procédé selon la revendication 11, **caractérisé en ce que** la plante de laine est modifiée par génie génétique.

13. Utilisation d'un concentrat de suspension selon une ou plusieurs des revendications 1 à 6 et/ou 9 pour la régulation de la croissance/défoliation d'une plante, en particulier d'une plante de laine.
